# EUROPEAN PATENT APPLICATION

(11) **EP 4 574 483 A1**
(43) Date of publication of application: **25.06.2025**
(21) Application number: 22958504.7
(22) Date of filing: 16.09.2022
(51) Int. Cl.: B60J 5/04, E05B 79/04

(54) **VEHICLE DOOR ASSEMBLY, VEHICLE DOOR, AND VEHICLE**

(71) Applicant: Shenzhen Yinwang Intelligent Technologies Co., Ltd., Shenzhen, Guangdong 518129 (CN)
(72) Inventor: ZHANG, Jing, Shenzhen, Guangdong 518129 (CN); WANG, Hongji, Shenzhen, Guangdong 518129 (CN)
(74) Representative: Pfenning, Meinig & Partner mbB
(86) International application number: PCT/CN2022/119429
(87) International publication number: WO 2024/055314

(57) **Abstract**

This application discloses a vehicle door assembly, a vehicle door, and a vehicle. The vehicle door assembly may include an inner door panel and a door latch mounting portion. The door latch mounting portion may be disposed on the inner door panel, the inner door panel may have a first mounting surface, the door latch mounting portion may have a second mounting surface, and the second mounting surface may be connected to a door latch. In addition, the first mounting surface is disposed facing the door latch mounting portion, the second mounting surface is opposite to the first mounting surface, and there is a first included angle between the first mounting surface and the second mounting surface. Mounting of the door latch of the vehicle door assembly provided in this application has small impact on a draft angle of the first mounting surface of the inner door panel. This helps increase the draft angle of the first mounting surface, to reduce a stamping crack risk of the first mounting surface in a stamping forming process. System performance of a vehicle door using the vehicle door assembly can be ensured. In addition, when the vehicle door is used in a vehicle, smoothness of unlocking and engaging the door latch and a striker can be effectively improved. This helps improve user experience.

## Description

### TECHNICAL FIELD

This application relates to the field of vehicle technologies, and in particular, to a vehicle door assembly, a vehicle door, and a vehicle.

### BACKGROUND

With economic development and continuous improvement of living standards, utilization of vehicles (new energy vehicles, intelligent vehicles, and the like) is increasingly high, and users also raise higher requirements on vehicle use experience.

As an important part of a vehicle, a vehicle door may provide a passage for a user to enter and exit the vehicle. In a process of getting on or off the vehicle, the user needs to open and close the vehicle door. When the vehicle door is opened, a door latch on the vehicle door is unlocked with a striker on a vehicle body. When the vehicle door is closed, the door latch on the vehicle door is engaged with the striker on the vehicle body.

An inner door panel can be used as not only a decorative part of the vehicle door, but also a bearing part of the door latch. Generally, to make the door latch meet an arrangement requirement of the door latch, and make a process of unlocking and engaging the door latch and the striker smooth, when the door latch is fastened to the inner door panel, a draft angle of a door latch mounting surface that is of the door latch and that is connected to the inner door panel is small. On this basis, if the door latch mounting surface is attached to a surface of a door latch mounting area of the inner door panel, a draft angle of the surface of the door latch mounting area is also small. When a stamping depth of the surface of the door latch mounting area of the inner door panel in a forming direction of the door latch mounting area of the inner door panel is large, an excessively small draft angle easily causes a stamping crack of the inner door panel in a stamping forming process.

### SUMMARY

This application provides a vehicle door assembly, a vehicle door, and a vehicle, to increase a draft angle of a door latch mounting area of an inner door panel, so as to reduce a stamping crack risk of the area.

According to a first aspect, this application provides a vehicle door assembly, where the vehicle door assembly may include an inner door panel and a door latch mounting portion. The door latch mounting portion may be disposed on the inner door panel, the inner door panel may have a first mounting surface, the door latch mounting portion may have a second mounting surface, and the second mounting surface may be connected to a door latch. In addition, the first mounting surface is disposed facing the door latch mounting portion, and the second mounting surface is opposite to the first mounting surface. It may be understood that the second mounting surface is located between the first mounting surface and the door latch. In addition, there is a first included angle between the first mounting surface and the second mounting surface.

In this application, the first mounting surface of the inner door panel and the second mounting surface of the door latch mounting portion are disposed at the first included angle, so that a limitation of a connection between the door latch and the door latch mounting portion on a draft angle of the first mounting surface can be effectively reduced while a mounting requirement of the door latch is met. Therefore, when the first mounting surface is obtained through processing by using a stamping forming process, the draft angle of the first mounting surface is large. This helps reduce a stamping crack risk of the first mounting surface.

According to the vehicle door assembly provided in this application, the draft angle of the first mounting surface may be greater than or equal to 5°, and may be specifically adjusted based on the first included angle between the first mounting surface and the second mounting surface. In this way, a stretching rate of the first mounting surface in the stamping forming process can be effectively reduced, to reduce the stamping crack risk of the first mounting surface.

In addition, the vehicle door assembly may further include the door latch, and the door latch is fastened to the door latch mounting portion. Specifically, the door latch is connected to the second mounting surface of the door latch mounting portion. The door latch mounting portion can support the door latch, so that shaking of the door latch can be effectively reduced in a process in which the door latch rotates with a vehicle door, and a process of engaging or unlocking the door latch and the striker is smooth. This helps improve durability of the door latch.

When the door latch is specifically connected to the door latch mounting portion, the door latch may have a door latch mounting surface, and the door latch mounting surface may be attached to the second mounting surface of the door latch mounting portion. In this way, reliability of supporting the door latch by the door latch mounting portion can be effectively improved.

In a possible implementation of this application, the door latch mounting portion may be fastened to the inner door panel, and a fastening manner may be but is not limited to welding, riveting, bonding, or the like. The door latch mounting portion may be located between the door latch and the inner door panel, so that the door latch can be connected to the inner door panel through the door latch mounting portion.

In this application, a manner of forming the door latch mounting portion is not limited. For example, in a possible implementation, the door latch mounting portion may be a stamping part. In this case, the door latch mounting portion may be of a thin panel structure. In addition, to reduce impact of disposing of the door latch mounting portion and the door latch on the draft angle of the first mounting surface, a gap may exist between the door latch mounting portion and the first mounting surface, so that the draft angle of the first mounting surface may be adjusted within a range of the gap.

In another possible implementation of this application, the door latch mounting portion may alternatively be a casting obtained by using a casting forming process. In this way, the door latch mounting portion may have strong structural stability, so that the door latch mounting portion can more reliably support the door latch.

The door latch mounting portion may further include a third mounting surface. The third mounting surface is located between the first mounting surface and the second mounting surface, and the third mounting surface is attached to the inner door panel. Therefore, the inner door panel and the door latch mounting portion can jointly support the door latch, to effectively improve mounting reliability of the door latch.

In the foregoing implementation, the door latch mounting portion may be of an independent structure, and may be connected to the inner door panel through welding, riveting, bonding, or the like. In some other possible implementations of this application, the door latch mounting portion and the inner door panel may alternatively be of an integrally formed structure. To be specific, the door latch mounting portion and the inner door panel are obtained through processing by using one process. The door latch mounting portion may be a protrusion structure formed on the first mounting surface of the inner door panel. In this way, structural reliability of the door latch mounting portion and the inner door panel can be improved.

In any one of the foregoing implementations of this application, a thickness of the door latch mounting portion may be greater than or equal to 0.7 mm, so that the door latch mounting portion can stably support the door latch.

In a possible implementation of this application, a notch may be further provided on the inner door panel. In addition, there is a connection portion between the door latch and the second mounting surface, and the notch may be disposed opposite to the connection portion, so that the notch can expose the connection portion, and the notch can provide avoidance space for a tool or a connecting piece used to connect the door latch to the door latch mounting portion. This improves convenience of connecting the door latch to the door latch mounting portion.

In addition, the vehicle door assembly may further include a blocking cover, and the blocking cover may be configured to block the notch. In this way, the door latch can be waterproof and dustproof, and impact of disposing of the notch on appearance aesthetics of the inner door panel can be reduced.

In this application, a manner of connecting the blocking cover to the inner door panel is not limited. For example, the connection manner may be clamping, bonding, or the like, so that the connection between the blocking cover and the inner door panel is simple.

According to a second aspect, this application further provides a vehicle door, where the vehicle door includes the vehicle door assembly according to the first aspect. In the vehicle door, mounting of a door latch of the vehicle door assembly has small impact on a draft angle of a first mounting surface of an inner door panel. This helps increase the draft angle of the first mounting surface of the inner door panel, to reduce a stamping crack risk of the first mounting surface of the inner door panel in a stamping forming process. In this way, system performance of the vehicle door can be ensured, and processing costs of the vehicle door can be effectively controlled.

According to a third aspect, this application further provides a vehicle, where the vehicle may include a vehicle body and the vehicle door according to the second aspect, and the vehicle door is hinged to the vehicle body. The vehicle body may be provided with a striker. When the vehicle door is covered on the vehicle body, the striker may be engaged with the door latch, to lock the vehicle door and the vehicle body. In the vehicle provided in this application, system performance of the vehicle door can be ensured, and a process of unlocking and engaging the door latch on the vehicle door and the striker on the vehicle body is smooth. This can effectively improve durability of the door latch, and help improve user experience.

### BRIEF DESCRIPTION OF DRAWINGS

FIG. 1 is a diagram of a partial structure of a vehicle according to an embodiment of this application;
FIG. 2 is a diagram of an arrangement requirement of a currently commonly used door latch according to an embodiment of this application;
FIG. 3 is a projection view of a three-dimensional image shown in FIG. 2 on a plane defined by an X direction and a Y direction;
FIG. 4 is a diagram of a structure of a vehicle door assembly according to a conventional solution;
FIG. 5 is a diagram of a structure of a vehicle door according to an embodiment of this application;
FIG. 6 is a sectional view of a vehicle door assembly according to an embodiment of this application;
FIG. 7a is a diagram of a structure principle of a vehicle door assembly according to an embodiment of this application;
FIG. 7b is a diagram of a structure principle of a vehicle door assembly according to another embodiment of this application;
FIG. 8 is an enlarged view of a partial structure at a location B in FIG. 1;
FIG. 9 is a diagram of a partial structure of a vehicle door assembly according to an embodiment of this application;
FIG. 10a is a diagram of a structure principle of a vehicle door assembly according to another embodiment of this application;
FIG. 10b is a diagram of a structure principle of a vehicle door assembly according to another embodiment of this application;
FIG. 11 is a diagram of a structure principle of a vehicle door assembly according to another embodiment of this application;
FIG. 12 is a diagram of a structure principle of a vehicle door assembly according to another embodiment of this application;
FIG. 13 is a diagram of a partial structure of a tail door part of a vehicle according to an embodiment of this application; and
FIG. 14 is a sectional view at a location C-C in FIG. 13.

Reference numerals:
1: vehicle door; 1a: tail door; 101: inner door panel; 1011: first mounting surface; 10111: latch mouth via; 10112: notch;
102: outer door panel; 103: door latch; 1031: door latch mounting surface; 104: door latch mounting portion; 1041: second mounting surface;
1042: third mounting surface; 1043: fourth mounting surface; 105: vehicle door frame; 106: connection point; 107: gap; 108: blocking cover;
1081: through hole; 2: vehicle body; and 201: striker.

### DESCRIPTION OF EMBODIMENTS

To make objectives, technical solutions, and advantages of this application clearer, the following describes embodiments of this application with reference to the accompanying drawings. Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. In addition, terms such as "first" and "second" in this specification are merely used for distinction and description, and should not be understood as an indication or implication of relative importance or an indication or implication of a sequence.

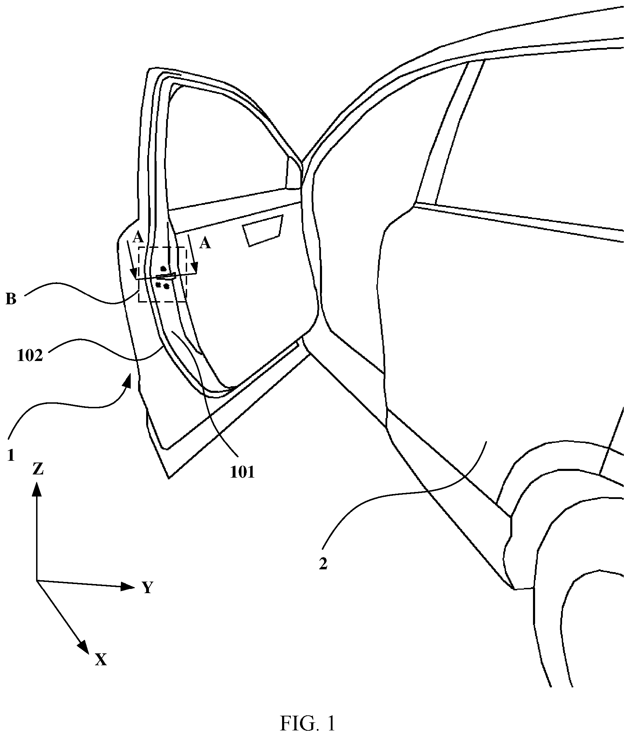

A vehicle door is an important part of a vehicle. In addition to being used as a passage for a user to enter and exit the vehicle, the vehicle door may also isolate interference outside the vehicle, and provide security assurance for the user in the vehicle to an extent. FIG. 1 is a diagram of a partial structure of a vehicle according to an embodiment of this application. In this application, the vehicle may be but is not limited to a new energy vehicle, an intelligent vehicle, or another type of vehicle. In addition to a vehicle door 1, the vehicle may further include a vehicle body 2, and the vehicle door 1 may be hinged to the vehicle body 2 through a hinge (not shown in FIG. 1). A user may open the vehicle door 1 to get on and off the vehicle. When the vehicle door 1 is opened, a door latch (not shown in FIG. 1) on the vehicle door 1 is unlocked with a striker (not shown in FIG. 1) on the vehicle body 2. When the vehicle door 1 is closed, the door latch on the vehicle door 1 is engaged with the striker on the vehicle body 2, so that the vehicle door 1 and the vehicle body 2 are locked. It may be understood that, a process of opening or closing the vehicle door 1 is a process in which the vehicle door 1 rotates around the hinge relative to the vehicle body 2.

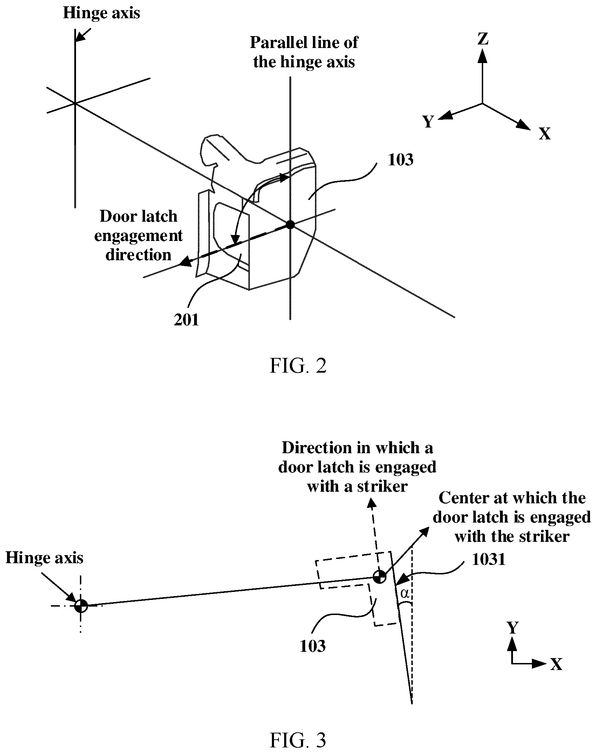

The vehicle door 1 may usually include an inner door panel 101 and an outer door panel 102, where the inner door panel 101 is disposed closer to the interior of the vehicle relative to the outer door panel 102. Currently, the door latch on the vehicle door 1 is mostly disposed on the inner door panel 101. However, to make a process of unlocking and engaging the door latch and the striker smooth in the process of opening and closing the vehicle door 1, so as to improve user experience, an arrangement manner of the door latch usually needs to be considered. FIG. 2 is a diagram of an arrangement requirement of a currently commonly used door latch according to an embodiment of this application, and FIG. 2 shows a three-dimensional image of a state in which the door latch is engaged with a striker 201. In the three-dimensional image, an X direction indicates a length direction of the vehicle, or may be understood as a direction from a head of the vehicle to a tail of the vehicle; a Y direction indicates a width direction of the vehicle; and a Z direction indicates an extension direction of a hinge axis. In addition, it should be noted that directions indicated by the X direction, the Y direction, and the Z direction that appear in embodiments of this application remain unchanged.

In the process in which the vehicle door 1 rotates around the hinge, the door latch may move on a plane defined by the X direction and the Y direction, or move on a plane parallel to the plane defined by the X direction and the Y direction. In addition, a center at which the door latch 103 is engaged with the striker 201 may also be located on the plane. In FIG. 2, a dashed line with an arrow indicates a direction in which the door latch 103 is engaged with the striker 201. Based on this, a parallel line of the hinge axis may be made at the center at which the door latch 103 is engaged with the striker 201, and the direction in which the door latch 103 is engaged with the striker 201 is perpendicular to the parallel line of the hinge axis.

In addition, FIG. 3 is a projection view of the three-dimensional image shown in FIG. 2 on the plane defined by the X direction and the Y direction. It can be learned from a connection relationship between the door latch 103 and the inner door panel 101 in the foregoing embodiments that the door latch 103 may have a door latch mounting surface 1031. When the door latch 103 is engaged with the striker 201 shown in FIG. 3, there is an included angle α between the door latch mounting surface 1031 and the Y direction. In a possible implementation, the included angle α ranges from 5° to 10°.

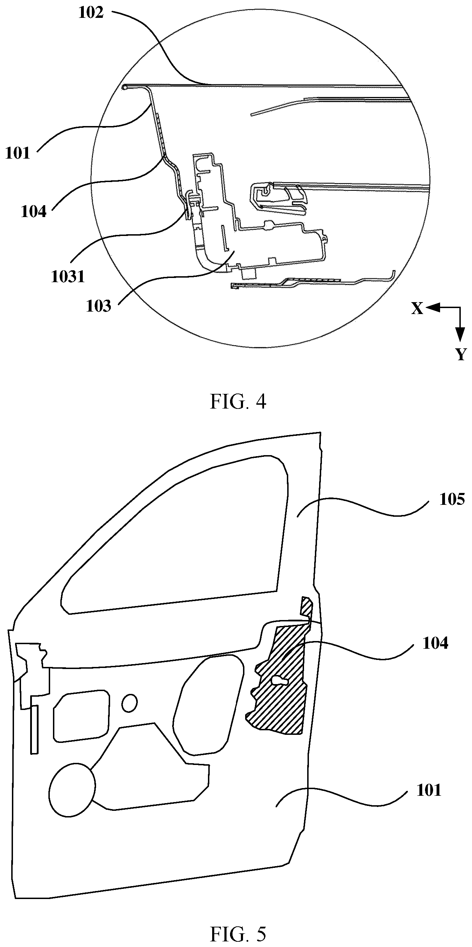

FIG. 4 is a diagram of a structure of a vehicle door assembly according to a conventional solution. When the vehicle door assembly provided in the conventional solution is used in the vehicle door 1 in FIG. 1, FIG. 4 is an A-A sectional view of the vehicle door 1 shown in FIG. 1. FIG. 4 shows a connection relationship between the door latch 103 and the inner door panel 101 in the conventional solution. To reduce shaking in a process of unlocking or engaging the door latch 103 and the striker 201, in some current solutions, the door latch mounting surface 1031 is basically parallel to a surface of a door latch mounting area of the inner door panel 101. In addition, the door latch 103 may be connected to the inner door panel 101 through a door latch mounting portion 104, and a part that is of the door latch mounting portion 104 and that is connected to the door latch 103 is disposed with an equal thickness. In this solution, the door latch 103, the door latch mounting portion 104, and the inner door panel 101 may be connected through a fastener like a bolt.

However, on the inner door panel 101 obtained through stamping forming, the door latch mounting surface 1031 is basically parallel to the surface of the door latch mounting area of the inner door panel 101, and therefore a draft angle of the surface of the door latch mounting area is approximately from 5° to 10°. When a stamping depth of the surface of the door latch mounting area in a forming direction of the door latch mounting area is large, an excessively small draft angle causes a large stretching rate of the area, and consequently, a stamping crack easily occurs in the area. It should be noted that a draft angle is usually an included angle between a normal direction of a parting surface of a mold and a tangent direction of a side surface at which a workpiece intersects with the parting surface of the mold. In this application, the draft angle of the surface of the door latch mounting area of the inner door panel 101 may be understood as an included angle between the surface of the door latch mounting area and the Y direction when the vehicle door is in a closed state.

Based on this, this application provides a vehicle door assembly, a vehicle door, and a vehicle using the vehicle door. When the inner door panel is still formed through a stamping forming process, and the door latch can still meet the foregoing arrangement requirement, the included angle between the door latch mounting surface and the surface of the door latch mounting area of the inner door panel is changed, so that the draft angle of the surface of the door latch mounting area of the inner door panel is increased. In this way, a stamping crack risk of the area can be reduced without reducing a depth of the inner door panel in a stamping direction of the inner door panel, and processing costs of the inner door panel can be lower. In addition, when the vehicle door assembly provided in this application is used in the vehicle door, a thickness of the vehicle door can meet a design requirement, so that a limitation on space used to dispose a system function module like a security module in the vehicle door can be reduced, and system performance of the vehicle door can be ensured. The following further describes this application in detail with reference to the accompanying drawings and specific embodiments.

FIG. 5 is a diagram of a structure of a vehicle door according to an embodiment of this application. A vehicle door assembly is disposed on the vehicle door. In this embodiment of this application, the vehicle door assembly may include an inner door panel 101 and a door latch mounting portion 104. A material of the inner door panel 101 may be but is not limited to aluminum, steel, aluminum alloy, or the like. In addition, the inner door panel 101 may be a stamping-formed part. In the embodiment shown in FIG. 5, the vehicle door may further include a vehicle door frame 105, and the inner door panel 101 may be connected to the vehicle door frame 105. In some other possible embodiments of this application, the inner door panel 101 may alternatively be used in a vehicle door that is designed without the vehicle door frame 105.

The door latch mounting portion 104 is disposed on the inner door panel 101, and a material of the door latch mounting portion 104 may be but is not limited to aluminum, steel, aluminum alloy, or the like. In addition, the door latch mounting portion 104 and the inner door panel 101 may be made of a same material or different materials. This is not specifically limited in this application.

The door latch mounting portion 104 may be connected to a door latch. In other words, the door latch may be connected to the inner door panel 101 through the door latch mounting portion 104. In this application, a manner of connecting the door latch to the door latch mounting portion 104 is not limited. For example, the door latch may be connected to the door latch mounting portion 104 in a thread manner through a fastener like a bolt. In some possible embodiments, the door latch may alternatively be fastened to the door latch mounting portion 104 through welding or the like.

The inner door panel 101 may include a door latch mounting area, and a part that is of the door latch mounting portion 104 and that is connected to the door latch may be disposed opposite to the door latch mounting area. In this way, the door latch mounting portion 104 connects the door latch to the inner door panel 101, so that the door latch mounting portion 104 can support the door latch. This can effectively increase structural strength of the door latch mounting area of the inner door panel 101, and help improve mounting reliability of the door latch.

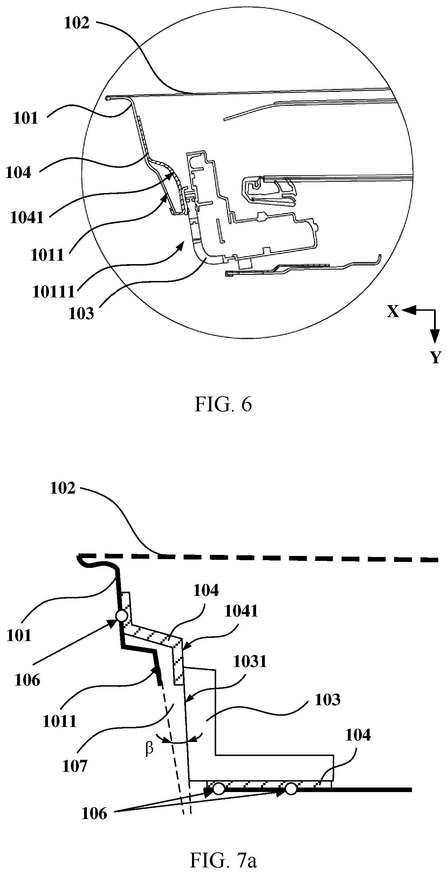

When the inner door panel 101 and the door latch mounting portion 104 are specifically disposed, refer to FIG. 6. FIG. 6 is a sectional view of the vehicle door assembly according to an embodiment of this application. When the vehicle door assembly provided in this embodiment of this application is used in the vehicle door 1 in FIG. 1, FIG. 6 is a sectional view at a location A-A of the vehicle door 1 shown in FIG. 1. In this embodiment of this application, the inner door panel 101 may include a first mounting surface 1011, and the first mounting surface 1011 may be a surface of the door latch mounting area. It can be learned from FIG. 6 that, in this embodiment of this application, the first mounting surface 1011 may be disposed facing the door latch mounting portion 104.

In the embodiment shown in FIG. 6, the door latch mounting portion 104 may be a stamping-formed part, the door latch mounting portion 104 has a second mounting surface 1041, and the second mounting surface 1041 is connected to a door latch 103. The first mounting surface 1011 is disposed facing the door latch mounting portion 104, and the second mounting surface 1041 is opposite to the first mounting surface 1011. In addition, still refer to FIG. 6. The vehicle door assembly provided in this embodiment of this application may further include the door latch 103, and the door latch mounting portion 104 may be located between the inner door panel 101 and the door latch 103. Based on this, it can be learned that the second mounting surface 1041 may be located between the first mounting surface 1011 and the door latch 103. In addition, in this application, a latch mouth via 10111 may be further provided at a location that is on the inner door panel 101 and that corresponds to the first mounting surface 1011. The latch mouth via 10111 may be disposed opposite to a latch mouth of the door latch 103, to expose the latch mouth of the door latch 103, so that a striker on a vehicle body can be inserted into the door latch 103 through the latch mouth via 10111.

FIG. 7a is a diagram of a structure principle of the vehicle door assembly according to a possible embodiment of this application. FIG. 7a may show a location relationship and a connection relationship between the inner door panel 101, the door latch mounting portion 104, and the door latch 103 of the vehicle door assembly shown in FIG. 6. It can be learned from FIG. 7a that, in this embodiment of this application, the inner door panel 101 may be connected to the door latch mounting portion 104 through a connection point 106, and the connection point 106 may be, for example, a welding point or a rivet point. In addition, there may be one, two, or more connection points 106. In addition, there is a first included angle β between the first mounting surface 1011 of the inner door panel 101 and the second mounting surface 1041 of the door latch mounting portion 104. The first included angle β may be an acute angle, for example, may be 5° to 8°, 8° to 15°, 15° to 20°, 20° to 25°, or 25° to 45°.

In addition, the door latch 103 may have a door latch mounting surface 1031. When the door latch 103 is connected to the door latch mounting portion 104, the door latch mounting surface 1031 may be attached to the second mounting surface 1041. This helps improve reliability of supporting the door latch 103 by the door latch mounting portion 104, to reduce shaking of the door latch 103 in a process of opening and closing the vehicle door, and improve durability of the door latch 103.

Because there is a first included angle β between the first mounting surface 1011 and the second mounting surface 1041, and the second mounting surface 1041 is attached to the door latch mounting surface 1031, there is also a first included angle β between the door latch mounting surface 1031 and the first mounting surface 1011. This can help reduce a limitation of mounting of the door latch 103 on a draft angle of the first mounting surface 1011 obtained through stamping forming, so that the draft angle of the first mounting surface 1011 can be increased, to reduce a stamping crack risk of the first mounting surface 1011 of the inner door panel 101 in a stamping forming process.

It can be learned from the foregoing descriptions that the draft angle of the first mounting surface 1011 may be understood as an included angle between the first mounting surface 1011 and a Y direction when the vehicle door is in a closed state. Therefore, in this embodiment of this application, the draft angle of the first mounting surface 1011 may be greater than or equal to 5°, for example, from 5° to 8°, 8° to 10°, 10° to 13°, 13° to 15°, 15° to 18°, 18° to 22°, 22° to 25°, 25° to 28°, 28° to 30°, 30° to 33°, 33° to 35°, 35° to 38°, 38° to 40°, 40° to 42°, or 42° to 45°. When the striker disposed on the vehicle body is engaged with the door latch 103, the striker may be inserted into the door latch 103 from a side that is of the first mounting surface 1011 and that is away from the door latch 103. Therefore, when the draft angle of the first mounting surface 1011 is set within a specific range, for example, within a range of 8° to 30°, a requirement for engaging the striker and the door latch 103 can be met without setting a length of the striker to be excessively long. This facilitates security of collision between the striker and the door latch 103.

Still refer to FIG. 6 and FIG. 7a. In the embodiments shown in FIG. 6 and FIG. 7a, the door latch mounting portion 104 may be a stamping-formed part, and the stamping-formed part may be of a thin panel structure. In this embodiment of this application, to make the door latch mounting portion 104 to stably support the door latch 103, a thickness of the door latch mounting portion 104 may be greater than or equal to 0.7 mm. For example, the thickness may be 1 mm, 1.2 mm, 1.5 mm, or 2 mm. In addition, the door latch mounting portion 104 may be fastened to the inner door panel 101 through a thread connection, welding, riveting, bonding, or the like.

Based on the foregoing descriptions of the vehicle door assembly shown in FIG. 6 and FIG. 7a, when the door latch mounting portion 104 is of a thin panel structure obtained through stamping forming, to make the first included angle β exist between the second mounting surface 1041 of the door latch mounting portion 104 and the first mounting surface 1011 of the inner door panel 101, a gap 107 may exist between the door latch mounting portion 104 and the first mounting surface 1011. A size of the gap 107 may be adjusted based on an angle of the first included angle β.

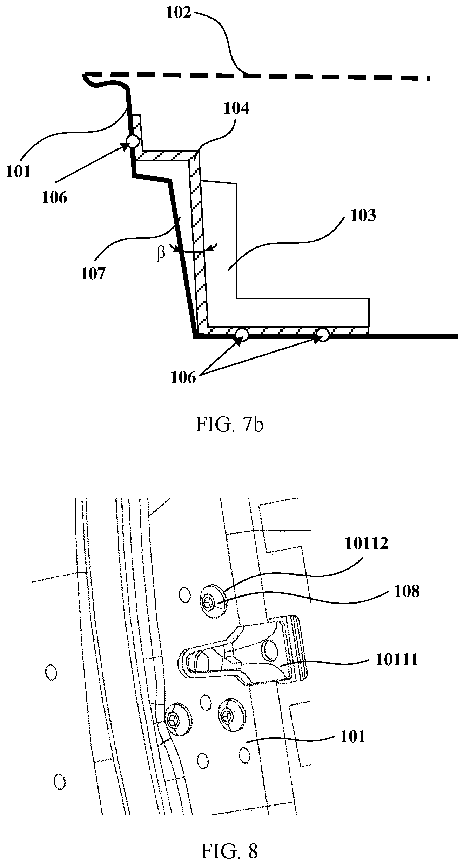

In addition, FIG. 7b is also a diagram of a structure principle of the vehicle door assembly. A difference between FIG. 7b and FIG. 7a lies in that FIG. 7b and FIG. 7a are diagrams of structure principles respectively corresponding to different cut locations of the vehicle door assembly. FIG. 7a is a corresponding sectional view of the vehicle door assembly at the latch mouth via of the inner door panel 101, and FIG. 7b is a corresponding sectional view of the vehicle door assembly at a part that is of the inner door panel 101 and on which no latch mouth via is disposed. Still refer to FIG. 7a and FIG. 7b. Because the door latch mounting portion 104 is fastened to the inner door panel 101, in this embodiment, the gap 107 may exist between the first mounting surface 1011 and the part that is of the door latch mounting portion 104 and that is connected to the door latch 103, and another part of the door latch mounting portion 104 may be fastened to the inner door panel 101 through the connection point 106. Therefore, when the door latch mounting portion 104 is reliably connected to the inner door panel 101, impact of the part that is of the door latch mounting portion 104 and that is connected to the door latch 103 on the draft angle of the first mounting surface 1011 can be further reduced. This helps increase the draft angle of the first mounting surface 1011.

After the vehicle door assembly provided in the foregoing embodiments of this application is described, the following describes mounting steps of the inner door panel 101, the door latch mounting portion 104, and the door latch 103 in the vehicle door assembly.

First, the door latch mounting portion 104 may be fastened to the inner door panel 101, and a connection manner may be but is not limited to a thread connection, welding, riveting, bonding, or the like.

Second, the door latch 103 may be fastened to the door latch mounting portion 104, and a connection manner may be but is not limited to a thread connection, welding, or the like.

Because the second mounting surface 1041 of the door latch mounting portion 104 is located between the first mounting surface 1011 of the inner door panel 101 and the door latch 103, after the door latch mounting portion 104 is fastened to the inner door panel 101, and the door latch 103 is connected to the second mounting surface 1041 of the door latch mounting portion 104, the first mounting surface 1011 may block a connection portion between the door latch 103 and the door latch mounting portion 104. This is inconvenient to implement the connection between the door latch 103 and the door latch mounting portion 104. To resolve this problem, refer to FIG. 8. FIG. 8 is an enlarged view of a partial structure at a location B in FIG. 1, and may show an area in which the first mounting surface 1011 of the inner door panel 101 is located. In this embodiment of this application, a notch 10112 may be provided on the inner door panel 101, and the notch 10112 penetrates the area in which the first mounting surface 1011 is located. In addition, the notch 10112 may be disposed opposite to the connection portion between the door latch and the door latch mounting portion 104.

The connection portion between the door latch and the door latch mounting portion 104 is a structure used to implement the connection between the door latch and the door latch mounting portion 104. For example, when the door latch is connected to the door latch mounting portion 104 through a fastener like a bolt, the connection portion is bolt mounting holes provided on the door latch and the door latch mounting portion 104, and the bolt mounting hole may be a threaded hole or a through hole. The notch 10112 disposed opposite to the connection portion is provided on the first mounting surface 1011, so that the notch 10112 can expose the connection portion, to provide avoidance space for a tool and a connecting piece used to connect the door latch to the door latch mounting portion 104, so as to implement the connection between the door latch and the door latch mounting portion 104.

There may be one connection portion or at least two connection portions between the door latch and the door latch mounting portion 104. Therefore, still refer to FIG. 8. In the embodiment shown in FIG. 8, one notch 10112 may be provided on the first mounting surface 1011 for each connection portion. In addition, the vehicle door 1 assembly may further include a blocking cover 108, and a material of the blocking cover 108 may be but is not limited to plastic or rubber. In this way, after the door latch 103 is connected to the door latch mounting portion 104, the blocking cover 108 may block each notch 10112 in a one-to-one correspondence, so that the door latch 103 can be dustproof and waterproof, and appearance aesthetics of the vehicle door assembly can be effectively improved.

In this application, a manner of connecting the blocking cover 108 to the inner door panel 101 is not limited. For example, the connection manner may be clamping, bonding, or the like. In addition, the blocking cover 108 may be detachably connected to the inner door panel 101. This can facilitate checking, maintenance, or the like of the connection between the door latch 103 and the door latch mounting portion 104.

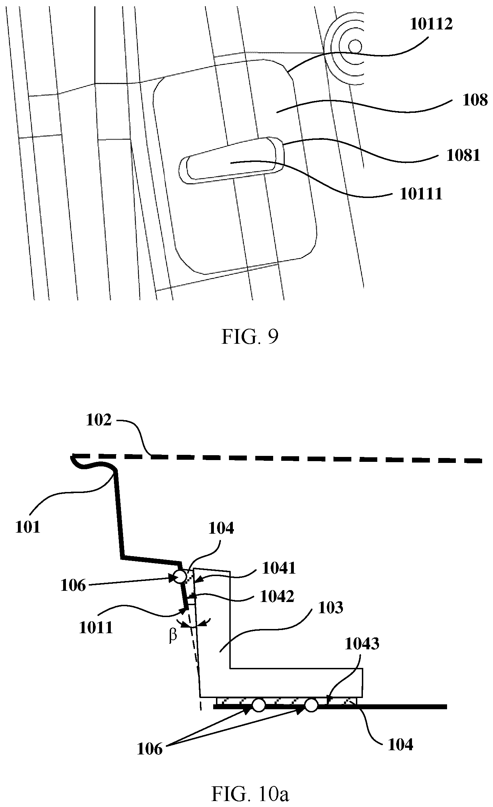

In addition, FIG. 9 is a diagram of a partial structure of the vehicle door assembly according to a possible embodiment of this application. Different from that in the embodiment shown in FIG. 8, in the embodiment shown in FIG. 9, the first mounting surface 1011 may be provided with one notch 10112, and the notch 10112 may provide avoidance space for all connection portions. This helps simplify a structure of the inner door panel 101. It should be noted that, in this embodiment of this application, a through hole 1081 disposed opposite to the latch mouth via 10111 may be further provided on the blocking cover 108, to facilitate insertion between the striker and the door latch.

In this application, in addition to the disposing manners provided in the embodiments shown in FIG. 6, FIG. 7a, and FIG. 7b, the door latch mounting portion 104 may further use some other possible disposing manners. For example, FIG. 10a is a diagram of a structure principle of the vehicle door assembly according to another possible embodiment of this application. Similar to FIG. 7a, FIG. 10a is a corresponding sectional view of the vehicle door assembly at the latch mouth via of the inner door panel 101. In this embodiment, the door latch mounting portion 104 may be a casting obtained through processing by using a casting forming process, and a material of the casting may be but is not limited to aluminum, aluminum alloy, steel, or the like. Because structure strength of the casting is high, the casting can provide more reliable support for the door latch, to improve mounting reliability of the door latch. In this way, shaking of the door latch in the process of opening and closing the vehicle door 1 can be reduced, to improve durability of the door latch.

In the embodiment shown in FIG. 10a, the second mounting surface 1041 of the door latch mounting portion 104 may be disposed with reference to the embodiment shown in FIG. 6 or FIG. 7a. For example, the second mounting surface 1041 is connected to the door latch 103, and there is a first included angle β between the second mounting surface 1041 and the first mounting surface 1011 of the inner door panel 101. In addition, in the embodiment shown in FIG. 10a, the door latch mounting portion 104 further includes a third mounting surface 1042, the third mounting surface 1042 is located between the first mounting surface 1011 and the second mounting surface 1041, and the third mounting surface 1042 is attached to the first mounting surface 1011.

It should be noted that, that the third mounting surface 1042 is attached to the first mounting surface 1011 may be that the third mounting surface 1042 and the first mounting surface 1011 are in contact with each other with extrusion pressure. In this way, the inner door panel 101 and the door latch mounting portion 104 can jointly support the door latch, so that the door latch is mounted more reliably. This helps improve a service life of the door latch. In some other possible embodiments of this application, that the third mounting surface 1042 is attached to the first mounting surface 1011 may alternatively be that the third mounting surface 1042 and the first mounting surface 1011 are in contact with each other without extrusion pressure.

Because there is a first included angle β between the first mounting surface 1011 and the second mounting surface 1041, and the third mounting surface 1042 is attached to the first mounting surface 1011, there is also a first included angle β between the third mounting surface 1042 and the first mounting surface 1011. It can be learned that, in this embodiment of this application, the door latch mounting portion 104 is of a non-equal-thickness structure. In this case, the thickness of the door latch mounting portion 104 may be understood as a minimum thickness of the door latch mounting portion 104. For example, if the thickness of the door latch mounting portion 104 is greater than or equal to 0.7 mm, it may be understood that the minimum thickness of the door latch mounting portion 104 is greater than or equal to 0.7 mm.

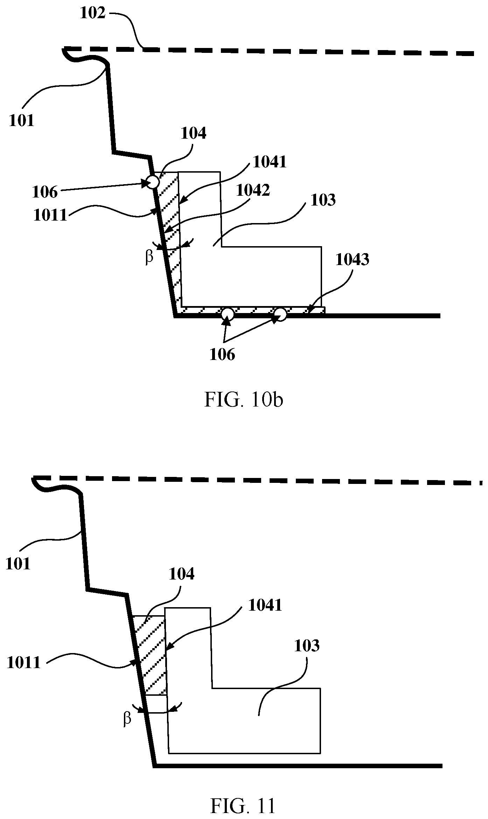

In addition, FIG. 10b is also a diagram of a structure principle of the vehicle door assembly. Similar to FIG. 7b, FIG. 10b is a corresponding sectional view of the vehicle door assembly at a part that is of the inner door panel 101 and on which no latch mouth via is disposed. In this embodiment, a shape of the door latch mounting portion 104 is not specifically limited. For example, the door latch mounting portion 104 may be of an L-shaped structure. The door latch mounting portion 104 of the L-shaped structure may support the entire door latch 103, to improve stability of supporting the door latch 103 by the door latch mounting portion 104. In addition, in addition to a part at which the second mounting surface 1041 and the third mounting surface 1042 are located, another part of the door latch mounting portion 104 may be fastened to the inner door panel 101. For example, the door latch mounting portion 104 may further include a fourth mounting surface 1043, the third mounting surface 1042 and the fourth mounting surface 1043 are connected to form an L-shaped surface, and the fourth mounting surface 1043 may be fastened to the inner door panel 101. The connection manner may be but is not limited to a thread connection, welding, riveting, bonding, or the like. For example, in the embodiment shown in FIG. 10b, the fourth mounting surface 1043 is connected to the inner door panel 101 through the connection point 106, and the connection point 106 may be, for example, a welding point, a riveting point, or the like. In this way, when the door latch mounting portion 104 is reliably connected to the inner door panel 101, the door latch mounting portion 104 and the inner door panel 101 can jointly support the door latch 103, to improve mounting reliability of the door latch 103. This helps improve durability of the door latch 103.

When the door latch mounting portion 104 uses the structure shown in FIG. 10a or FIG. 10b, for mounting steps of the door latch 103, the door latch mounting portion 104, and the inner door panel 101 of the vehicle door assembly, refer to any one of the foregoing embodiments. Details are not described herein again. In addition, the inner door panel 101 of the vehicle door assembly shown in FIG. 10a or FIG. 10b may also be provided with a notch 10112 that provides avoidance space for the tool and the connecting piece used to connect the door latch 103 to the door latch mounting portion 104. For a specific disposing manner of the notch 10112, refer to the embodiment shown in FIG. 8 or FIG. 9. Details are not described herein again.

In this application, in addition to the disposing manner provided in any one of the foregoing embodiments, in some possible embodiments, the door latch mounting portion 104 may alternatively be a protrusion structure disposed on the inner door panel 101. For example, FIG. 11 is a diagram of a structure principle of the vehicle door assembly according to another possible embodiment of this application. In the embodiment shown in FIG. 11, the door latch mounting portion 104 may be an independently formed protrusion structure, and may be fastened to the first mounting surface 1011 of the inner door panel 101 through a thread connection, welding, riveting, bonding, or the like. In addition, the door latch mounting portion 104 also has the second mounting surface 1041, and there is a first included angle β between the second mounting surface 1041 and the first mounting surface 1011. In the vehicle door assembly provided in the embodiment shown in FIG. 11, except that the door latch mounting portion 104 is different from that in the vehicle door assembly provided in the foregoing other embodiments, other structures and a connection relationship between the structures may be set with reference to any one of the foregoing embodiments. Details are not described herein again.

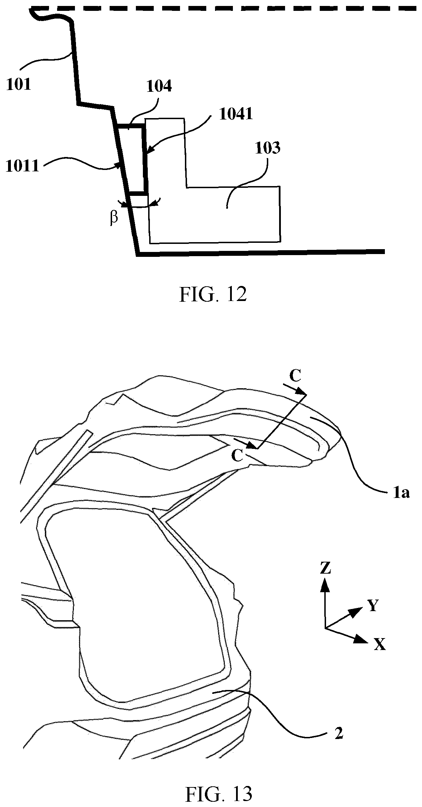

For another example, FIG. 12 is a diagram of a structure principle of the vehicle door assembly according to another possible embodiment of this application. In this embodiment, the door latch mounting portion 104 and the inner door panel 101 may be of an integrally formed structure, and a forming manner may be but is not limited to stamping forming or casting forming. It may be understood that, in this embodiment of this application, the door latch mounting portion 104 is formed on a plane on which the first mounting surface 1011 of the inner door panel 101 is located. In addition, the door latch mounting portion 104 also has the second mounting surface 1041, and there is a first included angle β between the second mounting surface 1041 and the first mounting surface 1011. In the vehicle door assembly provided in the embodiment shown in FIG. 12, except that the door latch mounting portion 104 is different from that in the vehicle door assembly provided in the foregoing other embodiments, other structures, a connection relationship between the structures, and the like may be set with reference to any one of the foregoing embodiments. Details are not described herein again.

It should be noted that in this application, the vehicle door is not merely a side door of the vehicle, and may alternatively be a tail door of the vehicle. In the foregoing embodiments, an example in which the vehicle door assembly is used in the side door is used for description. When the vehicle door assembly is used in the tail door, the vehicle door assembly may be specifically disposed with reference to that in the side door. For example, FIG. 13 is a diagram of a partial structure of a tail door part 1a of a vehicle according to a possible embodiment of this application.

Because the tail door 1a may also be connected to a vehicle body 2 through a hinge, a process of opening and closing the tail door 1a is a process in which the tail door 1a rotates around the hinge relative to the vehicle body 2. It may be understood that, in the process in which the tail door 1a rotates around the hinge, a door latch on the tail door 1a may move on a plane defined by an X direction and a Z direction, or move on a plane parallel to the plane defined by the X direction and the Z direction. In addition, a center at which a door latch is engaged with a striker may also be located on the plane.

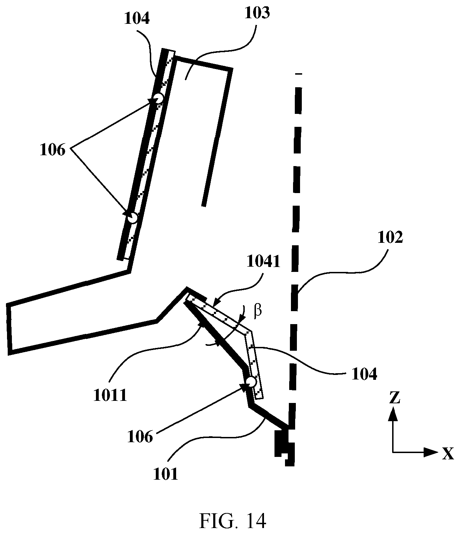

FIG. 14 is a sectional view at a location C-C in FIG. 13. FIG. 14 may show a disposing manner used when the foregoing vehicle door assembly is used in the tail door 1a. The disposing manner of the vehicle door assembly in FIG. 14 is similar to the disposing manner of the vehicle door 1 assembly in FIG. 7a. Details are not described herein again. In addition, FIG. 14 shows only a manner of disposing the door latch mounting portion 104 in the vehicle door assembly of the tail door 1a. When the door latch mounting portion 104 is disposed in the manner in the foregoing other embodiments, the door latch mounting portion 104 may still be used in the vehicle door 1 assembly of the tail door 1a. Details are not described herein.

In the vehicle door assembly provided in this embodiment of this application, mounting of the door latch 103 has small impact on the draft angle of the first mounting surface 1011 of the inner door panel 101. This helps increase the draft angle of the first mounting surface 1011 of the inner door panel 101, to reduce a stamping crack risk of the first mounting surface 1011 of the inner door panel 101 in a stamping forming process.

An embodiment of this application further provides a vehicle. Refer to FIG. 1 and FIG. 13. The vehicle includes but is not limited to a new energy vehicle, an intelligent vehicle, or another type of vehicle. The vehicle may include a vehicle body 2 and a vehicle door 1, and the vehicle door 1 may be hinged to the vehicle body through a hinge. In addition, the vehicle door 1 may be divided into a side door or a tail door. For example, there may be four side doors, which are two left-side doors and two right-side doors. There may be one tail door, which is disposed at a tail of the vehicle body 2.

When the vehicle door assembly provided in embodiments of this application is used in the vehicle door 1 (the side door or the tail door) of the vehicle, a process of unlocking and engaging a door latch 103 and a striker 201 on the vehicle body 2 can be smooth. This can effectively improve durability of the door latch 103, and help improve user experience.

It is clear that a person skilled in the art can make various modifications and variations to this application without departing from the protection scope of this application. This application is intended to cover these modifications and variations of this application provided that they fall within the scope of protection defined by the following claims and their equivalent technologies.

## Claims

1. A vehicle door assembly, comprising an inner door panel and a door latch mounting portion, wherein the door latch mounting portion is disposed on the inner door panel, wherein
the inner door panel has a first mounting surface;
the door latch mounting portion has a second mounting surface, and the second mounting surface is connected to a door latch; and
the first mounting surface is disposed facing the door latch mounting portion, the second mounting surface is opposite to the first mounting surface, and there is a first included angle between the first mounting surface and the second mounting surface.

2. The vehicle door assembly according to claim 1, wherein a draft angle of the first mounting surface is greater than or equal to 5°.

3. The vehicle door assembly according to claim 1 or 2, wherein the vehicle door assembly further comprises the door latch, and the door latch is fastened to the door latch mounting portion.

4. The vehicle door assembly according to claim 3, wherein the door latch has a door latch mounting surface, and the door latch mounting surface is attached to the second mounting surface.

5. The vehicle door assembly according to any one of claims 1 to 4, wherein the door latch mounting portion is fastened to the inner door panel, and the door latch mounting portion is located between the inner door panel and the door latch.

6. The vehicle door assembly according to any one of claims 1 to 5, wherein a gap exists between the door latch mounting portion and the first mounting surface.

7. The vehicle door assembly according to any one of claims 1 to 5, wherein the door latch mounting portion is a casting.

8. The vehicle door assembly according to claim 7, wherein the door latch mounting portion further comprises a third mounting surface, the third mounting surface is located between the first mounting surface and the second mounting surface, and the third mounting surface is attached to the inner door panel.

9. The vehicle door assembly according to any one of claims 1 to 4, wherein the door latch mounting portion and the inner door panel are of an integrally formed structure.

10. The vehicle door assembly according to any one of claims 1 to 9, wherein a notch is provided on the inner door panel, there is a connection portion between the door latch and the second mounting surface, and the notch is disposed opposite to the connection portion.

11. The vehicle door assembly according to claim 10, wherein the vehicle door assembly further comprises a blocking cover, and the blocking cover blocks the notch.

12. The vehicle door assembly according to claim 11, wherein the blocking cover is clamped or bonded to the inner door panel.

13. The vehicle door assembly according to any one of claims 1 to 12, wherein a thickness of the door latch mounting portion is greater than or equal to 0.7 mm.

14. A vehicle door, comprising the vehicle door assembly according to any one of claims 1 to 13.

15. A vehicle, comprising a vehicle body and the vehicle door according to claim 14, wherein the vehicle door is hinged to the vehicle body, the vehicle body is provided with a striker, and when the vehicle door is covered on the vehicle body, the striker is engaged with the door latch.
